Europäisches Patentamt

European Patent Office

Office européen des brevets

(11) Numéro de publication: **0 258 104 B1**

# (12) FASCICULE DE BREVET EUROPEEN

(45) Date de publication de fascicule du brevet: **22.04.92**

(51) Int. Cl.5: **G11B 20/12**, G11B 7/013, G06F 15/40

(21) Numéro de dépôt: **87401779.1**

(22) Date de dépôt: **30.07.87**

(54) **Procédé pour définir et modifier une partition sur l'espace de mémorisation d'un support non-effaçable.**

(30) Priorité: **31.07.86 FR 8611128**

(43) Date de publication de la demande:
**02.03.88 Bulletin 88/09**

(45) Mention de la délivrance du brevet:
**22.04.92 Bulletin 92/17**

(84) Etats contractants désignés:
**DE GB**

(56) Documents cités:
**EP-A- 0 072 704**
**EP-A- 0 114 186**
**GB-A- 1 383 105**
**GB-A- 2 157 035**
**US-A- 4 497 050**

**IBM TECHNICAL DISCLOSURE BULLETIN, vol. 24, no. 1B, juin 1981, pages 775-776, New York, US; D.D. GROSSMAN: "Updating non-erasable storage"**

(73) Titulaire: **Picard, Michel**
**16, Cours du Buisson**
**F-77420 Noisiel(FR)**

(72) Inventeur: **Picard, Michel**
**16, Cours du Buisson**
**F-77420 Noisiel(FR)**

(74) Mandataire: **Mongrédien, André et al**
**c/o BREVATOME 25, rue de Ponthieu**
**F-75008 Paris(FR)**

IEEE TRANSACTIONS ON MAGNETICS, vol. MAG-8, no. 3, septembre 1972, pages 416-420, New York, US; E.E. GRAY: "Laser mass memory system"

PATENT ABSTRACTS OF JAPAN, vol. 9, no. 83 (P-348)[1806], 12 avril 1985; & JP-A-59 213 081 (FUJITSU K.K.) 01-12-1984

PROCEEDINGS OF THE ACM SYMPOSIUM ON PRINCIPLES OF DATABASE SYSTEMS, Los Angeles, California, 29-31 mars 1982, pages 239-246, Association for Computing Machinery, New York, US; D. MAIER: "Using write-once memory for database storage"

OPTICA '87, THE INTERNATIONAL MEETING FOR OPTICAL PUBLISHING AND STORAGE, Amsterdam, 14-16 avril 1987, pages 331-338, Learned Information (Europe) Ltd, Oxford, GB; G. RUSSO et al.: "Optical storage for archiving astronomical data"

## Description

La présente invention a pour objet un procédé pour définir et modifier une partition sur un espace de mémorisation d'un support non-effaçable. Ces supports sont utilisés en particulier pour l'archivage d'informations volumineuses, car ils sont peu coûteux. Ils tendent à être employés de plus en plus dans les applications d'archivage de fichiers et de documents numérisés.

Le disque optique numérique constitue un exemple de support non-effaçable. Sur un tel support, il est possible d'écrire une information à tout moment, mais il n'est pas possible de modifier une information écrite. Un tel support est dit de type "WORM".

Le disque optique numérique est un support non-effaçable de grande capacité. Pour une gestion efficace de cet espace de mémorisation de grande taille, il est classique de découper cet espace en segments de différents tailles. Ceci offre une plus grande sécurité et une plus grande souplesse d'emploi du disque optique numérique.

Par ailleurs, le disque optique numérique est un support amovible destiné à être transporté entre une zone de stockage et un appareil de lecture. Il doit donc être muni de mécanismes d'identification sûrs et transportables.

On connaît plusieurs méthodes d'identification d'un support non-effaçable et de segmentation de l'espace de mémorisation de ce support.

En ce qui concerne l'identification, la méthode couramment utilisée consiste à écrire une information d'en-tête à un endroit précis de l'espace de mémorisation, généralement le premier secteur dans le cas d'un support non-effaçable organisé en secteurs.

Cette information d'en-tête est unique. Elle est relue lors de l'opération de montage du support non-effaçable, c'est-à-dire lorsque le disque est chargé dans un appareil de lecture.

Le fait de prévoir un en-tête unique est un inconvénient car si l'emplacement contenant l'en-tête ne peut pas être relu, par suite d'un défaut du support non-effaçable, l'information d'en-tête est inexploitable et ne peut pas être régénérée. Un autre inconvénient est que l'en-tête étant inscrit une seule fois, il ne peut pas mémoriser des informations qui évoluent telles que le taux de remplissage de l'espace de mémorisation du support non-effaçable.

Sur le support non-effaçable, les informations mémorisées sont organisées par exemple en fichiers. A chaque fichier sont associés deux types d'informations qui sont, d'une part, les informations de description du fichier, et d'autre part, les informations qui représentent le contenu proprement dit du fichier. Les informations de description sont beaucoup moins volumineuses que les informations de contenu.

On connaît différentes méthodes d'enregistrement de fichiers sur un support non-effaçable. Ces méthodes reposent chacune, pour chaque segment, sur une allocation séquentielle de la mémoire dans ce segment, par exemple par une allocation séquentielle de secteurs dans le cas d'un disque optique numérique.

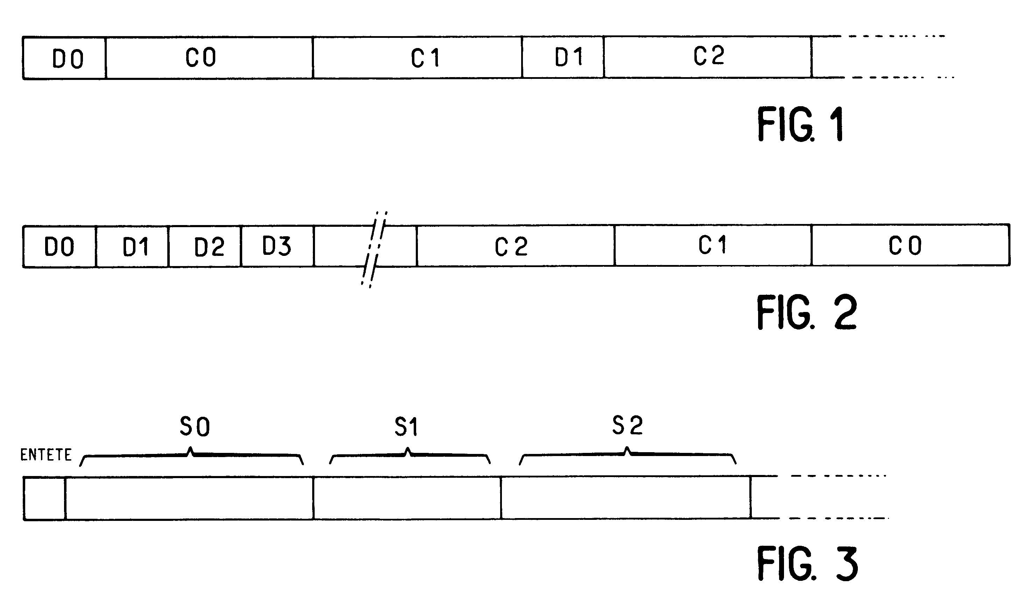

Selon une première méthode connue, la totalité de l'espace de mémorisation du support non-effaçable est considérée comme un segment unique. Les informations de description et les informations de contenu sont alors inscrites séquentiellement, et sont donc imbriquées dans le même segment comme on l'a représenté sur la figure 1.

Cette méthode présente au moins deux inconvénients. Premièrement, le temps d'accès à une information de description est fortement augmenté par le temps de parcours des informations de contenu, qui sont en général volumineuses. Deuxièmement, le parcours séquentiel complet des informations de description nécessite de parcourir la totalité des informations. Un tel parcours, qui peut être requis par exemple lors du montage du support non-effaçable sur un appareil de lecture demande alors un temps très important.

On connnaît également une deuxième méthode dans laquelle les informations de description et les informations de contenu sont mémorisées dans des segments différents. Plus précisément, l'espace de mémorisation du support non-effaçable est découpé en deux segments, comme on l'a représenté sur la figure 2.

Le premier segment débute à l'une des extrémités de l'espace de mémorisation du support non-effaçable et l'allocation de ce segment se fait séquentiellement à partir de ce point de départ ; le deuxième segment débute à l'autre extrémité de l'espace de mémorisation du support non-effaçable, et son allocation se fait, de même, de manière séquentielle à partir de ce point.

Cette deuxième méthode permet une gestion plus efficace du support non-effaçable par rapport à la première méthode. Néanmoins, toutes les informations de description sont mémorisées dans un seul et même segment. Ceci n'est pas satisfaisant car les informations de description peuvent être de nature et de volume très différents.

On connaît également une troisième méthode dans laquelle l'espace de mémorisation du support non-effaçable est découpé en N segments, comme représenté sur la figure 3. Ce découpage est fait lors de l'opération de formatage du support non-effaçable, et ne peut plus être modifié par la suite.

Cette troisième méthode est intéressante lorsque l'on peut prévoir dès l'origine le nombre et la taille des segments qui seront utiles. Dans le cas contraire, cette méthode conduit à perdre beaucoup d'espaces de mémorisation du support.

L'invention a pour but de remédier aux inconvénients des méthodes connues d'identification et de segmentation d'un support non-effaçable.

L'invention consiste à permettre une mise à jour de l'information d'en-tête, par remplacement de l'information d'en-tête devenue obsolète. L'invention permet ainsi de modifier, au cours du temps, la segmentation de l'espace de mémorisation du support non-effaçable. Elle permet également de prendre en compte dans l'en-tête des informations qui évoluent au cours de la vie du support non-effaçable, telles que le taux de remplissage, puisque l'invention permet le remplacement de ces informations. Enfin, elle facilite l'identification du support non-effaçable puisqu'u identificateur du support non-effaçable but être répété dans les différentes versions d'en-têtes successives.

L'invention a pour objet un procédé tel que décrit dans la revendication 1.

EP-A-72 704 décrit un procédé d'enregistrement sur un disque optique avec des pistes partagées en secteurs. Des pistes extérieures forment un espace pour mémoriser un répertoire sur les fichiers et les pistes intérieures forment un espace pour mémoriser les fichiers. Plusieurs répertoires peuvent être enregistrés dans un seul secteur. Selon un mode de réalisation une nouvelle version d'un fichier est enregistrée sans effacer la version la plus récente et un nouveau répertoire est enregistré à la suite de la version la plus récente. Mais, au contraire de l'invention, la version la plus récente est rendue illisible. Il n'y a pas de moyens de chaînage entre les répertoires.

Selon un mode de réalisation particulier, on prévoit un champ de chaînage dans chaque en-tête et on utilise ledit champ de chaînage d'un en-tête pour relier deux versions successives de l'en-tête lorsque lesdites vers1ons de l'en-tête sont situées dans des segments différents.

Les caractéristiques et avantages de l'invention ressortiront mieux de la description qui va suivre, donnée à titre illustratif mais non limitatif, en référence aux dessins annexés, sur lesquels :

- les figures 1 à 3, déjà décrites, illustrent des partitions d'un espace de mémorisation d'un support non-effaçable, obtenu selon des méthodes d'enregistrement connues,
- la figure 4 illustre une partition obtenue suivant le procédé de l'invention,
- la figure 5 illustre la structure de l'en-tête suivant un premier mode de réalisation de l'inventioon,
- la figure 6 illustre la structure de l'en-tête suivant un second mode de réalisation de l'invention, ladite structure permettant de réaliser un chaînage entre deux versions succssives de l'en-tête qui sont situées dans des segments différents de l'espace de mémorisation du support non-effaçable,
- la figure 7 illustre le chaînage entre deux versions successives de l'en-tête,
- la figure 8 illustre la structure de l'en-tête suivant un autre mode de réalisation de l'invention.

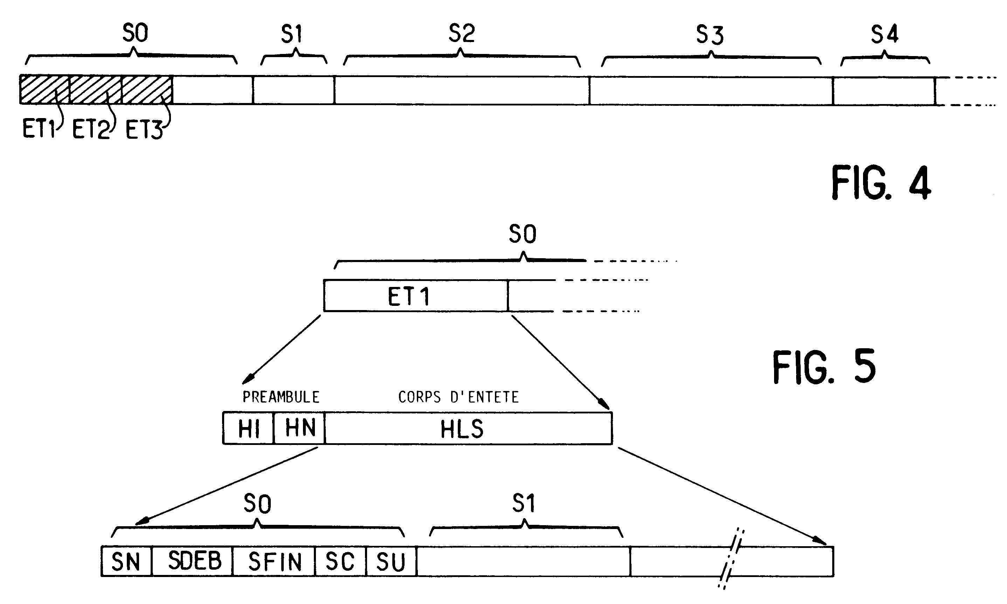

On a représenté sur la figure 4 une partition définie sur un espace de mémorisation d'un support non-effaçable. Ce support est par exemple un disque optique numérique et l'espace de mémorisation est alors organisé en secteurs.

On a représenté sur la figure 4 quelques uns des segments $S_0$, $S_1$,... constituant la partition de l'espace de mémorisation. Le premier segment $S_0$ est par exemple réservé aux versions successives de l'en-tête, chaque version définissant une partition particulière sur l'espace de mémorisation.

Parmi les autres segments, on trouve des segments $S_1$, $S_4$ de petite taille qui sont bien adaptés à la mémorisation d'informations de description d'un fichier, et des segments $S_2$, $S_3$ de grande taille qui sont conçus pour mémoriser des informations de contenu de fichier.

Conformément à l'invention, la partition de l'espace de mémorisation du support non-effaçable peut être modifiée en inscrivant, dans le segment réservé $S_0$, une nouvelle version de l'en-tête.

Dans le cas représenté sur la figure 4, une première version d'en-tête $ET_1$ a été inscrite dans le segment réservé $S_0$. Cet en-tête définissait une première partition de l'espace de mémorisation du support non-effaçable. Cet en-tête a par exemple été défini au moment du formatage du support non-effaçable.

La première partition a été modifiée par une deuxième version de l'en-tête $ET_2$ inscrite à la suite de la première version de l'en-tête $ET_1$ dans le segment $S_0$. La partition a été remaniée une deuxième fois par inscription d'une troisième version de l'en-tête $ET_3$ à la suite de la deuxième version de l'en-tête $ET_2$.

La possibilité de modifier la partition de l'espace de mémorisation du support non-effaçable par inscription de plusieurs versions successives de l'en-tête permet une gestion plus souple de cet espace de mémorisation.

L'accès à la version la plus récente de l'en-tête se fait simplement en parcourant le segment $S_0$ depuis la première version de l'en-tête. La version de l'en-tête la plus récente se reconnaît à ce qu'elle n'est suivie d'aucune autre version de l'en-tête.

On a représenté schématiquement sur la figure 5 la structure de l'en-tête suivant un premier mode de réalisation.

Dans ce mode de réalisation, l'en-tête se compose d'un préambule et d'un corps d'en-tête. Ceux-ci contiennent les informations nécessaires à la gestion de l'espace de mémorisation du support non-effaçable.

Le préambule comprend au moins un identificateur d'en-tête Hi, permettant de reconnaître que l'information est un en-tête. Il peut comprendre également un identificateur HN contenant le nom du support non-effaçable, ce qui permet une vérification lors du montage du support non-effaçable dans un appareil de lecture.

Le corps d'en-tête comprend au moins un champ HLS contenant la liste des segments formant la partition de l'espace de mémorisation. Chacun de ces segments $S_0$, $S_1$,... est défini au moins par une adresse de début SDEB et une adresse de fin SFIN qui expriment la position du segment dans l'espace de mémorisation. Des informations complémentaires peuvent être ajoutées telles que le nom du segment SN, l'adresse courante SC et des données particulières SU indiquées par l'utilisateur.

L'adresse courante SC est une adresse comprise entre l'adresse de début SDEB et l'adresse de fin SFIN et indique la première adresse libre du segment au moment de l'écriture de l'en-tête sur le support non-effaçable.

Bien entendu, au moment de l'écriture de l'en-tête dans le segment $S_0$, l'en-tête est complété par des bits de synchronisation et des bits de redondance. Ceux-ci n'ont pas été représentés sur la figure 5. L'utilisation de tels bits est classique et est bien connue de l'homme de l'art.

Le procédé de l'invention présente de nombreux avantages par rapport aux procédés connus. L'écriture de multiples versions d'en-tête garantit la sécurité des informations qui y sont répétées, telles que le nom HN du support non-effaçable. De plus, le procédé de l'invention permet l'enregistrement de données variant dans le temps, telles que des dates, des taux de remplissage, ... Ceci permet notamment d'écrire une version d'en-tête définitive lorsque le support non-effaçable est complètement écrit.

Enfin, le découpage de l'espace de mémorisation en segments permet de mémoriser de manière séparée des informations de nature différente. Ceci apporte, par rapport aux procédés connus, une amélioration de la perfomance, de la sécurité et de la souplesse d'utilisation.

L'augmentation de la performance résulte du fait qu'il est possible de regrouper les données les plus fréquemment utilisées, telles que les répertoires, dans des partitions de petite taille qui peuvent être directement chargées dans une mémoire rapide.

La sécurité est également améliorée car il est possible de mémoriser les informations les plus importantes dans un ou plusieurs segments, gérés avec des méthodes plus sûres que pour les autres segments, telles que des méthodes de redondance ou de duplication des informations dans des segments de même taille.

La souplesse d'utilisation est également accrue car chaque segment peut être géré avec une méthode qui lui est propre, et qui est adaptée à la nature des données qu'il contient (image, fichier de texte,...). Ceci permet également de faire évoluer les méthodes de gestion d'un segment dans le temps.

On a indiqué, en référence la figure 4, que les versions successives de l'en-tête étaient inscrites de manière consécutive dans un segment réservé $S_0$. Cependant, il peut arrriver qu'à un moment donné ce segment soit plein et qu'il ne soit plus possible d'y enregistrer une nouvelle version d'entête.

Dans ce cas, un deuxième segment est réservé pour l'enregistrement des versions ultérieures de l'en-tête. Mais il est alors nécessaire de prévoir des moyens pour relier la dernière version de l'entête contenu dans le segment $S_0$ de la version suivante de l'en-tête qui se trouve dans un autre segment.

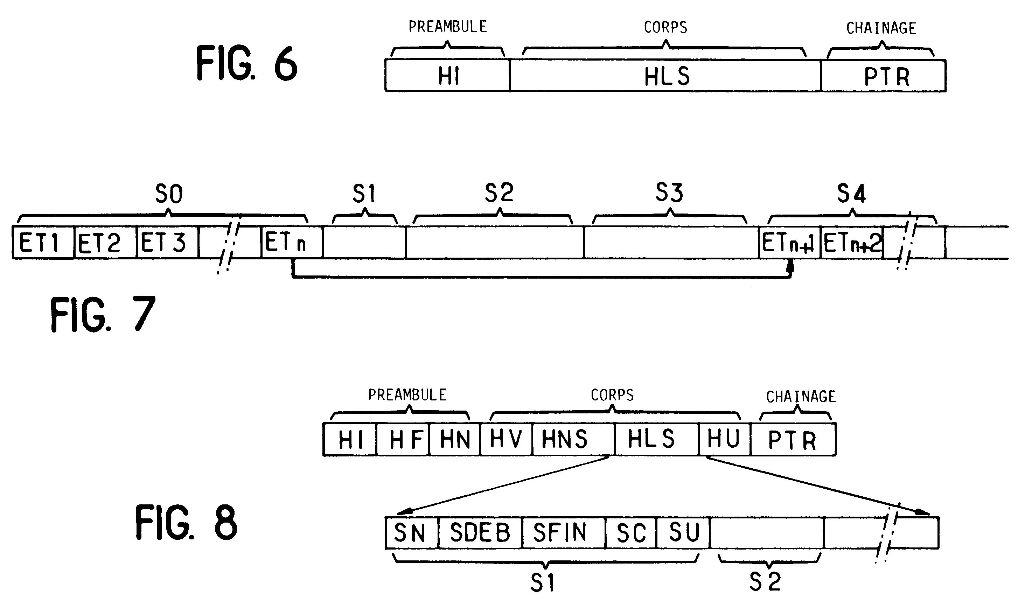

Ceci peut être réalisé, comme on l'a représenté sur la figure 6, par l'adjonction d'un champ de chaînage aux champs de préambule et de corps d'en-tête. Ce champ de chaînage contient un pointeur PTR qui permet de lier logiquement deux versions successives d'en-tête inscrites dans des segments différents.

Une telle situation est représentée sur la figure 7. Le segment $S_0$ contient une suite de versions de l'en-tête $ET_1$, $ET_2$,..., $ET_n$. Ces versions de l'en-tête remplissent complètement le segment $S_0$.

Les versions ultérieures de l'en-tête sont donc mémorisées dans un autre segment $S_4$.

La liaison entre la version de 1'en-tête $ET_n$ du segment $S_0$ et la version suivante de l'en-tête $ET_{n+1}$ du segment $S_4$ se fait au moyen du champ de chaînage, en donnant au pointeur PTR de la version de l'en-tête $ET_n$ la valeur de l'adresse de début du segment $S_4$.

Ce champ de chaînage peut n'être utilisé que pour la dernière version de l'en-tête d'un segment. En effet, pour les autres versions de l'en-tête d'un segment, la relation entre deux versions successives de l'en-tête est immédiate puisqu'ils sont inscrits de manière consécutive dans le même segment.

On a représenté sur la figure 8 une autre structure possible pour l'en-tête. Dans ce mode de réalisation, chaque en-tête comprend un préambule, un corps d'en-tête et un champ de chaînage. Les informations de synchronisation et de redondance qui sont ajoutées lors de l'écriture de l'en-tête dans l'espace de mémorisation du support non-effaçable n'ont pas été repésentées.

Le préambule comprend un identificateur d'en-tête HI qui permet d'indiquer que l'information écrite est un en-tête ; un identificateur de format HF qui permet d'indiquer le type de structure suivant lequel les informations sont mémorisées sur le support non-effaçable ; et un identificateur HN pour mémoriser le nom du support non-effaçable.

Les informations contenues dans le préambule sont fixes et permettent l'identification du support non-effaçable. La répétition de ces informations dans le préambule de chaque version d'en-tête constitue un élément de sécurité pour l'identification du support non-effaçable.

Le corps d'en-tête comprend la liste des segments HLS comme indiqué dans la figure 5. Il comprend en outre un identificateur HV pour mémoriser la version de l'en-tête, un identificateur HNS pour indiquer le nombre de segments constituant la partition de l'espace de mémorisation, et éventuellement un champ HU de données réservé à l'utilisateur.

Le demandeur a appliqué le procédé de l'invention à la gestion d'un disque optique numérique. Les valeurs choisies, à titre d'exemple, pour les différents paramètres de l'en-tête décrit sur la figure 8 sont :
- identificateur d'en-tête HI : 4 octets,
- identificateur de format HF : 1 octet,
- nom du disque HN : 14 octets,
- numéro de version HV : 2 octets,
- nombre de segments HNS : 2 octets,
- nom d'un segment SN : 14 octets,
- données utilisateur SU : 10 octets,
- adresses SDEB, SFIN et SC : 4 octets chacune,
- données utilisateur HU : 100 octets,
- pointeur PTR : 2 octets, pour indiquer l'indice d'un segment.

Dans ce mode de réalisation, chaque segment est défini par cinq données SN, SDEB,SFIN, SC et SU, représentant une longueur de 36 octets. Les autres éléments HI, HF, HN, HV, HNS, HU et PTR ont une longueur fixe de 123 octets.

Pour un disque optique numérique organisé en secteurs, ayant chacun une longueur de 1024 octets, un secteur peut contenir un en-tête définissant une partition de l'espace de mémorisation en 25 segments. Si le nombre de segments de la partition est plus important, l'enregistrement de l'en-tête nécessite au moins deux secteurs.

On trouvera résumé ci-après les différentes opérations possibles sur le support non-effaçable en relation avec le procédé de l'invention. On suppose, à titre d'exemple, que le support non-effaçable est un disque optique numérique organisé en secteurs.

## INITIALISATION D'UN DISQUE OPTIQUE NUMERIQUE

Un segment noté $S_0$ est réservé pour la mémorisation des versions successives de l'en-tête.

Une version initiale de l'en-tête, contenant le nom du disque HN, au moins le segment $S_0$ et un indice de version $HV = 1$, est inscrite à l'adresse de début du segment $S_0$.

## MONTAGE D'UN DISQUE OPTIQUE NUMERIQUE

Le montage consiste à se positionner à l'adresse de début du segment $S_0$ , puis à lire successivement les versions de l'en-tête. La version la plus récente est celle qui est immédiatement suivie par un secteur vierge. Si le champ de chaînage d'un en-tête non nul est rencontré, la lecture se pousuit sur le segment désigné par ce champ.

Le programme qui réalise le montage reçoit en paramètre le nom du disque, et vérifie que le champ HN contient bien ce nom.

## CREATION D'UNE VERSION D'EN-TETE

Une nouvelle version de l'en-tête peut être créée après l'opération de montage. La valeur HV est incrémentée de 1. L'information d'en-tête est inscrite à l'adresse courante SC du segment d'en-tête (segment 0 s'il n'y a pas de chaînage). Dans la nouvelle version de l'en-tête, cette adresse courante est augmentée de la longueur de cette nouvelle version de l'en-tête.

## CREATION D'UN SEGMENT

La création d'un segment consiste à renseigner chacun de ses champs (SN, SDEB, SFIN, SC et SU), puis à ajouter 1 au nombre de segments HNS et à créer une nouvelle version d'en-tête. La création simultanée de plusieurs segments donne lieu à la création d'une seule version d'en-tête.

## OUVERTURE D'UN SEGMENT

L'ouverture d'un segment se fait sur indication de son nom (SN) ou de son rang dans la liste des segments (HLS). Elle suppose que le montage du disque optique numérique a été réalisé au préalable. Elle donne lieu à la localisation de l'adresse courante entre l'adresse SC et l'adresse SFIN.

## LOCALISATION DE L'ADRESSE COURANTE

L'adresse courante d'un segment correspond au premier secteur vierge de ce segment dans le cas où l'écriture se fait par allocation séquentielle des secteurs de l'adresse SDEB à l'adresse SFIN.

La localisation de l'adresse courante est accélérée en prenant pour point de départ l'adresse SC obtenue lors de l'ouverture du segment. La valeur de SC est égale à l'adresse courante réelle s'il n'y a pas eu d'écriture dans le segment depuis la création de la dernière version d'en-tête. Dans le cas contraire, elle est inférieure.

## ECRITURE DANS UN SEGMENT

L'écriture dans un segment qui a été préalablement ouvert, se fait à l'adresse courante, et pour un nombre entier N de secteurs. L'adresse courante est ensuite augmentée de N secteurs.

Lorsque l'adresse de fin SFIN est atteinte, le segment est plein et aucune écriture n'y est plus possible.

## LECTURE DANS UN SEGMENT

La lecture dans un segment, préalablement ouvert, se fait entre les adresses SDEB et SFIN. Les adresses peuvent être exprimées de façon absolue (déplacement par rapport au début du disque) ou de façon relative (déplacement par rapport SDEB). Une tentative de lecture en dehors du segment retourne un code d'erreur.

## Revendications

1. Procédé d'enregistrement sur un support d'information non effaçable dans lequel on réalise une segmentation de l'espace de mémorisation dudit support et dans lequel des segments (S1, S2) permettent de mémoriser séparément des informations de description d'un fichier et des informations de contenu d'un fichier, dans lequel ou réserve au moins un segment (S0) pour mémoriser des versions successives d'en-têtes pour réaliser une mise à jour de la segmentation de l'espace de mémorisation, dans lequel, pour définir une nouvelle segmentation, on écrit une nouvelle version de l'en-tête à la suite de la version de l'en-tête la plus récente, les versions successives de l'en-tête étant inscrites séquentiellement dans un même segment, dans lequel, pour déterminer la partition courante, on parcourt les versions successives de l'en-tête dudit segment, depuis la version initiale de l'en-tête jusqu'à la version la plus récente de l'en-tête ; dans lequel chaque version de l'en-tête comprend un préambule contenant des informations fixes et un corps d'en-tête contenant des informations variables, le préambule contenant au moins l'identificateur d'en-tête et le corps de l'en-tête contenant au moins la liste des segments associés à ladite version d'en-tête, et dans lequel, pour l'inscription d'un nouvel en-tête en rem,placement de l'en-tête courant, lorsque le segment contenant les versions successives de l'en-tête est plein, on inscrit ledit nouvel en-tête dans un autre segment et on réalise un chaînage entre ledit nouvel en-tête et ledit en-tête courant.

2. Procédé selon la revendication 1, dans lequel chaque en-tête comporte en outre un champ de chaînage et en ce qu'on utilise ledit champ de chaînage pour relier deux versions successives de l'en-tête lorsque lesdites versions de l'en-tête sont situées dans des segments différents.

3. Procédé selon la revendication 1 ou 2, dans lequel le préambule comprend en outre un identificateur de format HF pour indiquer la structure des informations contenues sur le support non-effaçable et un paramètre HN pour indiquer le nom dudit support non-effaçable.

4. Procédé selon l'une quelconque des revendications 1 à 3, dans lequel le corps d'en-tête comprend en outre :
   - un paramètre HV pour indiquer un numéro de version d'en-tête,
   - un paramètre HNS pour indiquer le nombre de segments définis sur le support non effaçable, et
   - pour chaque segment :
     . un paramètre SN pour indiquer le nom du segment,
     . un paramètre SC pour indiquer l'adresse courante d'écriture
     à la création de la version d'en-tête.

5. Procédé selon l'une quelconque des revendications 1 à 4, dans lequel que le support non-effaçable est un disque optique numérique dont l'espace de mémorisation est organisé en secteurs.

## Claims

1. Process for recording on a non-erasable information carrier, in which there is a segmentation of the storage space of said carrier and in which segments ($S_1$, $S_2$) make it possible to separately store description informations of a file and content informations of a file, wherein at least one segment ($S_0$) is reserved for storing successive header versions for carrying out an updating of the segmentation of the storage space, wherein for defining a new segmentation, a new header version is written following onto the most recent header version, the successive header versions being sequentially written into the same segment, wherein for determining the current partition, there is a passage through the successive header versions of said segment from the initial header version to the most recent header version, wherein each header version comprises a preamble containing fixed informations and a header body containing variable informations, the preamble containing at least the header identifier and the header body containing at least the list of segments associated with said header version and wherein for the writing of a new header replacing the current header, when the segment containing the successive header versions is full, the new header is written in another segment and a chaining takes place between said new header and said current header.

2. Process according to claim 1, wherein each header also has a chaining field and the latter is used for connecting two successive header versions, when said header versions are located in different segments.

3. Process according to claims 1 or 2, wherein the preamble also comprises a format identifier (HF) for indicating the structure of the informations contained on the non-erasable carrier and a parameter (HN) for indicating the name of said non-erasable carrier.

4. Process according to any one of the claims 1 to 3, wherein the header body also comprises a parameter (HV) for indicating a header version number, a parameter (HNS) for indicating the number of segments defined on the non-erasable carrier and for each segment a parameter (SN) for indicating the name of the segment and a parameter (SC) for indicating the current writing address on forming the header version.

5. Process according to any one of the claims 1 to 4, wherein the non-erasable carrier is a digital optical disk, whose storage space is organized into sectors.

**Patentansprüche**

1. Verfahren zum Aufzeichnen auf einem nicht-löschbaren Informationsträger, bei dem man eine Segmentierung des Speicherraums des Trägers durchführt und bei dem Segmente (S1, S2) erlauben, Informationen zur Beschreibung einer Datei und Informationen über den Inhalt einer Datei getrennt zu speichern, bei dem man wenigstens ein Segment (S0) reserviert, um aufeinanderfolgende Vorspannversionen zu Speichern, um eine Offenlegung der Segmentierung des Speicherraumes zu erreichen, bei dem man zum Bilden einer neuen Segmentierung eine neue Version des Vorspanns hinter die jüngste Version des Vorspanns schreibt, wobei die aufeinanderfolgenden Vorspannversionen hintereinander in dasselbe Segment geschrieben sind, bei dem man zum Bestimmen der augenblicklichen Partition die aufeinanderfolgenden Vorspannversionen des Segments von der ursprünglichen Version bis zur jüngsten Version des Vorspanns durchgeht; bei dem jede Version des Vorspann eine Präambel, die feste Informationen enthält, und einen Vorspannkörper umfaßt, der variable Informationen enthält, wobei die Präambel wenigstens einen Vorspannidentifikator und der Vorspannkörper wenigstens die Liste der mit der besagten Vorspannversion verbundenen Segmente enthält, bei dem man zum Schreiben eines neuen Vorspanns als Ersatz des laufenden Vorspanns, wenn das die aufeinanderfolgenden Vorspannversionen enthaltende Segment voll ist, den neuen Vorspann in ein anderes Segment schreibt und eine Verkettung zwischen dem neuen Vorspann und dem laufenden Vorspann erzeugt.

2. Verfahren nach Anspruch 1, bei dem jeder Vorspann außerdem ein Verkettungsfeld umfaßt und bei dem man das Verkettungsfeld verwendet, um zwei aufeinanderfolgende Vorspannversionen zu verbinden, wenn die sich die Vorspannversionen in verschiedenen Segmenten befinden.

3. Verfahren nach Anspruch 1 oder 2, bei dem die Präambel außerdem einen Identifikator des Formats HF, um die Struktur der auf dem nicht-löschbaren Träger enthaltenen Informationen anzugeben, und einen Parameter HN umfaßt, um den Namen des nicht-löschbaren Trägers anzugeben.

4. Verfahren nach einem der Ansprüche 1 bis 3, bei dem der Vorspannkörper außerdem umfaßt:
- einen Parameter HV, um eine Vorspannsversionsnummer anzugeben,
- einen Parameter HNS, um die Anzahl der auf dem nichtlöschbaren Träger gebildeten Segmente anzugeben, und
-  für jedes Segment:
   . einen Parameter SN, um den Segmentnamen anzugeben,
   . einen Parameter SC, um die augenblickliche
Schreibadresse für das Bilden der Vorspannversion anzugeben.

5. Verfahren nach einem der Ansprüche 1 bis 4, bei dem der nicht-löschbare Träger eine digitale, optische Platte ist, deren Speicherraum in Sektoren organisiert ist.

| DO | CO | C1 | D1 | C2 | |
|----|----|----|----|----|--|

**FIG. 1**

| DO | D1 | D2 | D3 | // | C2 | C1 | CO |
|----|----|----|----|----|----|----|----|

**FIG. 2**

EP 0 258 104 B1

ENTETE

SO  S1  S2

**FIG. 3**

EP 0 258 104 B1

SO    S1    S2    S3    S4

ET1  ET2  ET3

## FIG. 4

SO

ET 1

PREAMBULE          CORPS D'ENTETE

HI | HN |          HLS

SO                    S1

SN | SDEB | SFIN | SC | SU

## FIG. 5

## FIG. 6

| PREAMBULE | CORPS | CHAINAGE |
|-----------|-------|----------|
| HI | HLS | PTR |

## FIG. 7

S0 — S1 — S2 — S3 — S4

| ET1 | ET2 | ET3 | / / | ETn | | | | ETn+1 | ETn+2 | / / | |

## FIG. 8

| PREAMBULE | | | CORPS | | | | CHAINAGE |
|-----------|---|---|-------|---|---|---|----------|
| HI | HF | HN | HV | HNS | HLS | HU | PTR |

| SN | SDEB | SFIN | SC | SU | | |

S1 — S2

EP 0 258 104 B1